# EUROPEAN PATENT APPLICATION

(11) **EP 4 847 312 A1**
(43) Date of publication of application: **02.12.2026**
(21) Application number: 26179849.0
(22) Date of filing: 20.05.2026
(51) Int. Cl.: B60N 2/885, B60N 2/28

(54) **ADJUSTABLE CHILD SAFETY SEAT**

(30) Priority: 30.05.2025 NO 20250644
(71) Applicant: HTS Hans Torgersen & Sønn AS, 3535 Krøderen (NO)
(72) Inventor: Van Essen, Christian, 1079 GP AMSTERDAM (NL); Westra, Hugo, 3051 VM Rotterdam (NL); Van Mourik, Okke, 3514 BS Utrecht (NL)
(74) Representative: Acapo Onsagers AS

(57) **Abstract**

The present disclosure provides a child safety seat (100) for use in a vehicle seat comprising a backrest (110), a headrest (120), and a seat pan (130). The headrest (120) is adjustable to vary a headrest height (d1), and the seat pan (130) is adjustable to vary a seat pan depth (d2). The child safety seat comprises a coupling mechanism (150) operatively connecting the headrest (120) and the seat pan (130) in such a way that the headrest height (d1) and the seat pan depth (d2) are adjusted concurrently.

## Description

### FIELD OF INVENTION

The present disclosure relates to a child safety seat for use in a vehicle seat and a method of adjusting the internal dimensions of the child safety seat.

### BACKGROUND

Child safety seats are widely used to secure and protect children while traveling in vehicles, with their use often being a requirement in law. These seats are designed to accommodate children of various sizes and ages, typically ranging from infants to older children. As children grow, their physical dimensions change, necessitating adjustments to the safety seat to maintain proper fit and protection.

Conventional child safety seats may include adjustable components to accommodate a child's growth. Common adjustable features include a headrest that can be raised or lowered to support the child's head and neck. Some seats also offer adjustable side supports to provide lateral protection. A harness system may be provided that can be adjusted to fit snugly across the child's body, or a seat belt of the vehicle may be inserted through a guide below and linked to the headrest so that it is ensured that the seat belt is laying close to the body and over the shoulder of the child.

However, these child safety seats may present challenges in achieving an optimal fit for children as they grow. The process of adjusting certain adjustable components can be time-consuming and may lead to inconsistent or improper adjustments. This raises the potential for incorrect positioning of the child within the seat. If the seat's dimensions are not properly matched to the child's size, there is a risk that the child may not be adequately restrained or protected in the event of a collision or sudden vehicle movement. Specifically, the seat belt may not provide the necessary restraint to the child by not laying sufficiently close to the child.

Additionally, parents or caregivers may struggle to determine the correct settings for each adjustable component based on the child's size. This may result in a frustrating and lengthy adjustment experience for both the parent or caregiver and the child, in addition to the discomfort for the child that may result from an incorrect adjustment.

Furthermore, as children grow rapidly, frequent adjustments to the safety seat may be required to maintain a proper fit. Seats are also often used by several different children of different sizes. This can lead to user frustration and may increase the likelihood of the seat being used in a sub-optimal configuration if adjustments are not made regularly or correctly.

It has been appreciated that a child safety seat is needed that overcomes one or more of these problems, i.e., a child safety seat which can be adjusted quickly and reliably to accommodate children of different sizes, while reducing the risk of incorrect or inconsistent adjustment of seating dimensions that affect occupant positioning and safety.

### SUMMARY

The invention for which patent protection is claimed is specified in the independent claim(s) of this application. Advantageous adaptations and versions of the claimed invention are specified in the dependent claims. The present disclosure is provided to interpret the claims.

According to a first aspect, there is provided a child safety seat for use in a vehicle seat. The child safety seat comprises a backrest, a headrest, and a seat pan, wherein the headrest is adjustable to vary a headrest height, wherein the seat pan is adjustable to vary a seat pan depth, and wherein the child safety seat comprises a coupling mechanism operatively connecting the headrest and the seat pan in such a way that the headrest height and the seat pan depth are adjusted concurrently.

The child safety seat may provide improved ease of use and efficiency in adjusting the seat to accommodate a child, either during initial setup or subsequent adjustment when the child has grown or when the seat is to be used by another child of different size. Furthermore, it enhances safety by ensuring that not only the headrest height is adjusted to correspond with the child's size, but also the seat pan depth, which can be more easily overlooked yet critical for proper positioning of the child within the seat. By utilizing a coupling mechanism that connects the headrest and seat pan adjustments, the seat may allow for the concurrent adjustment of multiple dimensions with a single action. This reduces the effort to adjust the seat, making its adjustment less of a burden. As a result, adjustment may become more regular so that the seat fits the child more of the time, and the child's safety and comfort is preserved. In addition to the advantages such a seat brings to child safety and comfort and ease of use, the child safety seat also provides improved portability, as the dimensions of the seat can quickly and straightforwardly be reduced to a minimum ready for carrying or stowing.

The vehicle seat may be a passenger seat in a car, truck, or van. The vehicle seat may be a front or a rear seat. The child safety seat is a separate seat that can be placed on top of the existing vehicle seat. These child safety seats may include attachment points or mechanisms to secure them firmly to the vehicle seat. In examples, the child safety seat may utilize the vehicle's existing seat belt system for attachment. The seat may have designated paths or guides through which the vehicle's seat belt can be routed to secure the child safety seat in place. The child safety seat may incorporate a base that remains installed in the vehicle, with a detachable seat portion that can be easily removed. The base may be secured using the vehicle's seat belt system or through a standardized attachment system such as ISOFIX or LATCH (Lower Anchors and Tethers for Children). The child safety seat may be any type of seat for use in a vehicle that includes a backrest and a headrest, including but not limited to: an infant seat, a convertible seat, a toddler seat, a combination seat, a rearward-facing seat, a forward-facing seat, and a high-back booster seat. In particular, the child safety seat may be a high-back booster seat designed to be used forward-facing in the vehicle and that comprises a backrest and a headrest. The child safety seat may comprise belt receiving means for receiving and guiding a seat belt of the vehicle for securing a child in the seat. These means may comprise a shoulder belt guide below and linked to the headrest.

The child safety seat may comprise a set of internal seating dimensions suitable for accommodating a child seated in the seat, wherein the internal seating dimensions comprises at least the headrest height and the seat pan depth. The internal seating dimensions may also include a side wing spacing. The internal seating dimensions can thus be concurrently increased to suit a growing child or to suit another child of a different size.

The headrest may be adjustable to increase or decrease the headrest height. The adjustment of the headrest may be by linear movement or by movement along a curved path. The headrest height may be adjusted by directly moving the headrest, by directly moving the seat pan, or by a separate component such as an actuating device.

The headrest may be movable relative to the seat pan and/or to the backrest. The headrest height may be taken as a height from the seat pan to the headrest. Accordingly, the headrest height may be a distance from a predefined point or plane of the child safety seat, such as a seat pan plane or a backrest plane of the child safety seat, or a point on the seat pan or on the backrest. Where a plane is used, the plane may be a plane in the x-y dimension, with the headrest height being a perpendicular measurement in the z direction of the child safety seat, or near perpendicular. The headrest may be movable vertically, or near vertically, i.e. up and down, relative to the seat pan.

The seat pan may be adjustable to increase or decrease the seat pan depth. The adjustment may be by linear movement or by movement along a curved path. Adjustment of the seat pan may be by extending the seat pan to move the front edge of the seat pan further away from the back rest. Such an adjustment may effectively elongate the seat pan to achieve the desired seat pan depth. The seat pan depth may be adjusted by directly moving the seat pan, by directly moving the headrest, or by a separate component such as an actuating device.

The seat pan may be movable relative to the backrest to increase or decrease the seat pan depth, which depth is taken as a depth from the backrest to a front side of the seat pan. The seat pan depth may be a distance from a predefined point or plane of the child safety seat, such as a backrest plane of the child safety seat or a point on the backrest or, in some examples, a smallest depth of the headrest. Where a plane is used, the plane may be a plane in the x-z dimension, with the seat pan depth being a perpendicular measurement in the y direction of the child safety seat, or near perpendicular. The seat pan may also be said to be movable or extendable forwards and rearwards relative to the backrest. Correct seat pan depth is important so that the child may bend the knees when seated without moving the lower back away from the back rest.

The headrest may be connected to an upper portion of the backrest. The seat pan may be connected to a lower portion of the backrest.

The coupling mechanism is provided to couple movement of the headrest and the seat pan. The coupling mechanism may thus couple the adjustment of the headrest with the adjustment of the seat pan such that the headrest height and the seat pan depth are either increased or decreased concurrently. Because of the coupling mechanism, several internal seating dimensions may be increased or decreased concurrently only by movement of one of the headrest or seat pan or by operation of one actuating device. As used herein, the term "concurrently" means that the adjustments occur at the same time or as part of the same operation, such that when one component is adjusted, the other component is automatically adjusted as well due to the coupling mechanism. Thus, due to the coupling mechanism, adjustment of the headrest to increase or decrease the headrest height may cause movement of the seat pan to increase or decrease in the seat pan depth, and vice versa, thus concurrently increasing or decreasing the internal seating dimensions. Such a movement where the components move at the same time may also be referred to a simultaneous adjustment, such that the adjustment is made "simultaneously".

The coupling mechanism may be configured for proportional adjustment between the headrest and the seat pan based on a predefined ratio. The coupling mechanism may be configured for proportional adjustment such that the variation or adjustment in the headrest height is proportionally larger compared to the variation or adjustment of the seat pan depth. Thus, the resulting variation in the headrest height when operating the actuating device may be preferably proportionally larger compared to the variation of the seat pan depth. This may be to correspond to typical proportions of a child's body.

The proportional adjustment between the headrest height and seat pan depth may allow the child safety seat to better accommodate the natural growth patterns of children. By configuring the coupling mechanism to adjust the headrest height proportionally more than the seat pan depth, the seat may maintain a better fit for the child's body proportions over time. For example, the length increase of the relevant upper body portion (from hips to neck) is typically larger compared to the length increase of the relevant upper leg portion (from knees to hip) of the child, thus needing different adjustment of the headrest and the seat pan to accommodate this.

The ratio of variation, i.e. variation of the headrest height vs. variation of the seat pan depth, may be in the range between 1:1 to 3:1, e.g. the ratio may be 1.5:1, or preferably 2:1 or in the area thereof. Thus, the variation in headrest height may e.g. be twice as much as the variation in seat pan depth.

The coupling mechanism may comprise a rack and pinion system. The rack and pinion system may comprise a headrest rack and a seat pan rack, interconnected by a pinion. In some examples, the headrest rack and the seat pan rack may be different, i.e. they may have different teeth spacing to enable variation in the amount of adjustment. In some examples, two connected pinions with different sizes or teeth may be provided to enable such variation.

The seat may comprise a connecting member configured to transfer the movement from the seat pan rack to the seat pan. The connecting member may comprise a first end connected to the seat pan rack and an opposite second end connected to the seat pan. The connecting member may transfer substantially vertical movement, i.e. up and down movement, to substantially horizontal movement, i.e. forwards and rearwards movement. The connecting member may be a flexible member e.g. for allowing variations in backrest inclination.

The child safety seat may comprise an actuating device for adjusting the headrest and the seat pan. The coupling mechanism may comprise the actuating device. The actuating device may be arranged on or through one or each side wing, where included, for easy access. The actuating device may be provided to both sides of the child safety seat for access from either side of the vehicle, such that one may choose to operate either one of the actuating devices. The actuating device may comprise a turning knob or handle. The actuating device may comprise a turning knob or handle on one or both sides to allow for easy access to the actuating device from either side of the vehicle. The movement of the headrest and the seat pan may be actuated manually, either via the actuating device or directly. The actuating device may comprise one or more predetermined positions suitable for different ages or child heights. The predetermined positions may be marked by an indicator on the child safety seat.

The child safety seat may comprise two side wings. The side wings may be provided on opposite sides of the backrest for supporting the upper arms and shoulders of the child when seated in the seat. The side wings may be adjustable to vary a side wing spacing, the side wing spacing being a lateral distance between the side wings. The coupling mechanism may operatively connect the side wings with the headrest and/or with the seat pan in such a way that the side wing spacing is adjusted concurrently with the adjustment of the headrest height and the seat pan depth.

The side wings may be adjustable to increase or decrease the side wing spacing for adaptation to a width of the child's upper body portion in the shoulder area. The adjustment may be made by various types of movements, e.g. by lateral translatory movement of the side wings or by a rotation of the side wings about the z-axis or about the y-axis that causes the side wings to open up to increase the side wing spacing or to close to decrease the side wing spacing. The side wings may for example be configured to be moved laterally relative to a longitudinal center line of the backrest or the side wings may be configured to pivot about a rear longitudinal axis thereof to move the front portion of the sidewings so that the side wing spacing increases or decreases. The adjustment of the headrest, and/or the seat pan, and/or the side wings may be a stepwise or a gradual movement.

The backrest and side wings may be integrally formed. In other words, the backrest and side wings may comprise one unitary body.

The adjustable side wings may provide enhanced lateral support and protection for the child's upper body as they grow. By allowing concurrent adjustment with the headrest height and seat pan depth, the side wings may maintain proper positioning relative to the child's shoulders and torso across different sizes and ages. This coordinated adjustment may help ensure that the side impact protection remains optimally placed as the child grows taller and broader.

In some examples, the side wings may be adjustable separately to the headrest height and the seat pan depth.

The child safety seat may comprise a side shell at each side of the backrest, each side shell extending from the backrest and covering at least partly an outside of the side wing, wherein the side shells are non-movable to ensure a fixed outer lateral dimension of the seat (100). Thus, while the side wing spacing is adjustable by moving the sidewings, the outer lateral dimension taken between the side shells remains constant. The side wings are thus movable within the space between the side shells.

The backrest may be foldable relative to the seat pan to allow the backrest to fold against the seat pan thereby enabling a compact configuration of the child safety seat suitable for storage and/or transportation. The child safety seat may comprise a hinge for allowing folding of the backrest relative to the seat pan. The hinge may be arranged to allow folding only in certain positions of the headrest, seat pan, or backrest, e.g. when the headrest is in the lowermost position. Such features further enhance the portability of the seat, as the child safety seat can be made as compact as possible through the folding and combined reduction in the seat pan depth and headrest height.

The child safety seat may comprise a locking mechanism for fixing the headrest height and seat pan depth following adjustment. The locking mechanism may fix the coupling mechanism in place, or may fix one or both of the headrest height or the seat pan in place.

To accommodate children with different body proportions, the seat pan may comprise means for fine-adjustment of the seat pan depth without adjusting the headrest height. The seat pan may therefore be movably connected to the connecting member to allow the seat pan to move forwards or rewards relative to the connecting member and thereby cause a corresponding variation in the seat pan depth. Thus, the seat pan may comprise a seat pan adjustment mechanism configured to allow fine-adjustment of the seat pan to increase or decrease the seat pan depth without varying the headrest height.

The child safety seat may comprise belt receiving means for receiving and guiding a seat belt of the vehicle for securing a child in the seat. These means may include a shoulder belt guide which may be movable with the headrest.

The seat pan may slide along a base of the child safety seat.

According to a second aspect, there is provided a method of adjusting the internal dimensions of a child safety seat according to the first aspect, comprising operating the coupling mechanism to increase or decrease the internal seating dimensions concurrently.

The internal seating dimensions may include at least the headrest height and the seat pan depth and optionally the side wing spacing. Operating the coupling mechanism may include operating an actuating device or moving one of the headrest or seat pan.

### BRIEF DESCRIPTION OF FIGURES

Figs. 1A and 1B show front perspective views of a child safety seat in a first configuration and a second configuration respectively.
Fig. 2 shows a side section view of a portion of the child safety seat in the first configuration, illustrating an internal coupling mechanism for adjustment of the child safety seat.
Figs. 3A and 3B show side section views of the child safety seat in the first and second configurations respectively.
Figs. 4A and 4B show rear perspective views of a further portion of the child safety seat in the first and second configurations respectively.
Fig. 5 shows a rear perspective view of the portion of the child safety seat of Fig. 4 in the second configuration with a cover.
Figs. 6A and 6B show rear perspective views of a yet further portion of the child safety seat in the first and second configurations respectively.
Figs. 7A and 7B show top views of a cross-section through a side wing, a side wing insert, and a side shell.

Common reference numerals are used throughout the figures to indicate similar features.

### DETAILED DESCRIPTION

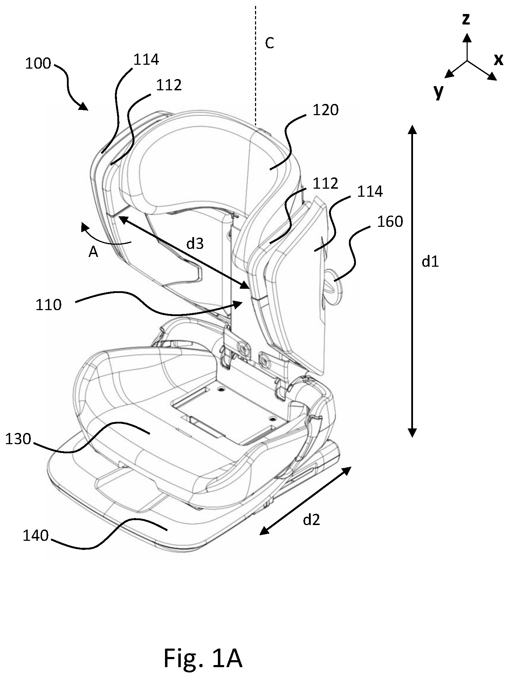

Figs. 1A-7B show a child safety seat or portions thereof in different configurations. The child safety seat includes a coupling mechanism that enables concurrent adjustment of a headrest height and a seat pan depth to accommodate children of different sizes. The features and operation of the child safety seat, including the coupling mechanism and its associated components, will be described in detail below.

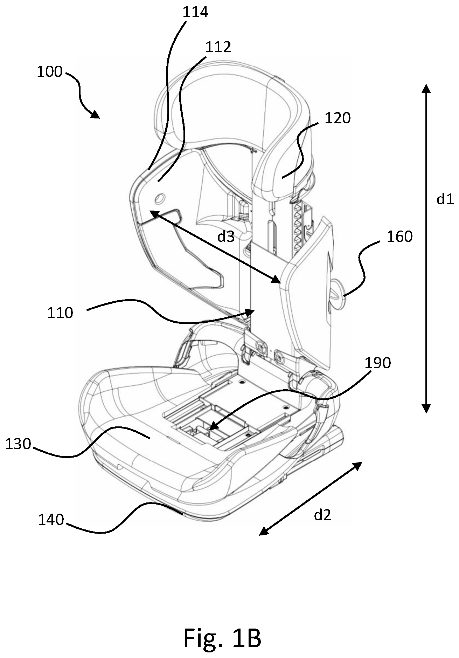

Starting at Figs. 1A and 1B, a child safety seat 100 for use in a vehicle seat is shown in two different configurations. In this example, the child safety seat 100 is a forward-facing high-back booster seat. The child safety seat 100 comprises a backrest 110, a headrest 120, a seat pan 130, and a base 140. In use, a child is seated in the child safety seat 100 and sits on the seat pan 130, with their back against the backrest 110 and their head within or against the headrest 120. The base 140 is to be placed on a seat pan of the vehicle seat, in use, with a rear of the seat sitting against a backrest of the vehicle seat.

The backrest 110 forms a support structure of the child safety seat 100. The headrest 120 is connected to an upper portion of the backrest 110, while the seat pan 130 is connected to a lower portion of the backrest 110. The backrest 110 is arranged substantially vertically or with a slight backwards inclination, i.e. it is to be placed with the backrest 110 and/or the headrest 120 resting against the backrest of the vehicle seat. In most cases, the backrest 110 will have slight backwards inclination for comfortable sitting posture, so that the angle between the seat pan 130 and the backrest 110 is not exactly 90 degrees, but somewhat above this, for example 90 to 110 degrees. The backrest 110 comprises a longitudinal center axis C illustrated as a dashed line in Fig. 1A, that extends between the bottom and the top of the backrest 110.

Two side wings 112 are provided on opposite sides of the backrest 110 for supporting the upper arms and shoulders of a child when seated in the child safety seat 100. A side shell 114 extends at each side from the backrest 110 and covering at least partly an outside of the side wings 112. The side shells 114 provide additional structural support and shaping for the child safety seat 100 and are non-movable so that the maximum outer lateral dimension across the seat 100, taken between the outermost point of each of the side shells, is fixed.

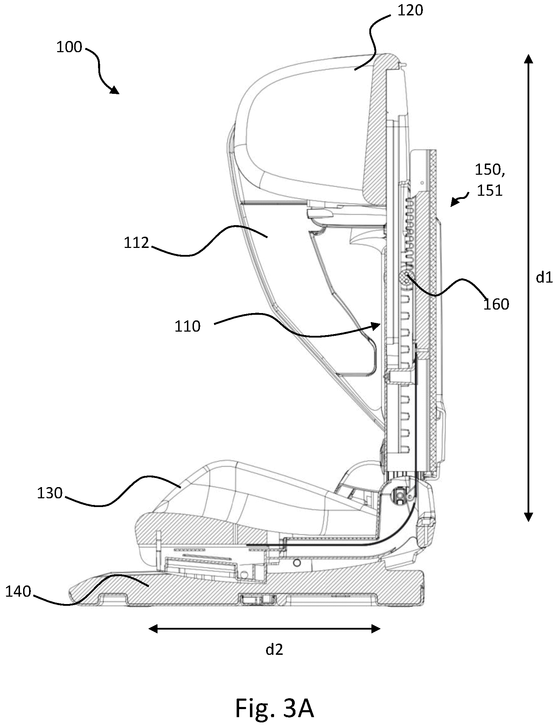

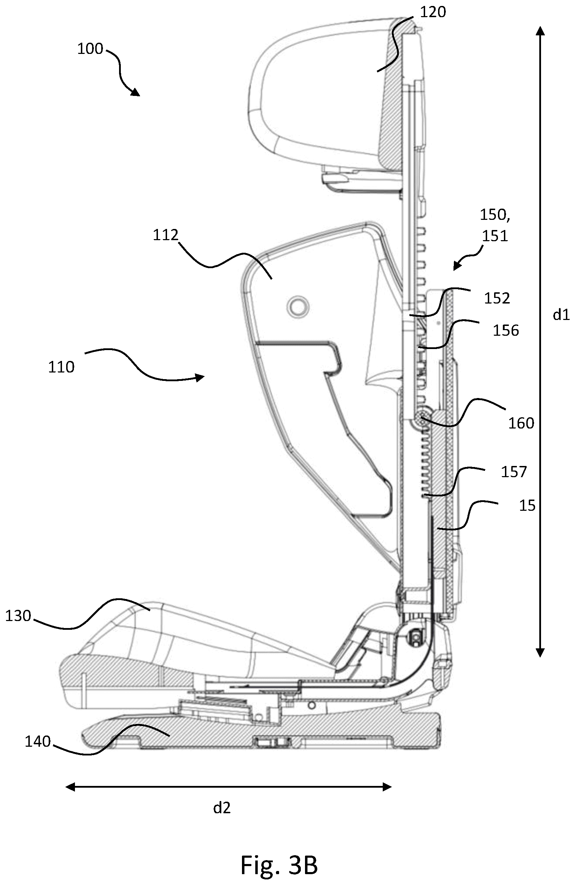

The child safety seat 100 features three adjustable dimensions to accommodate children of different sizes. The headrest 120 is adjustable to vary a headrest height d1, which, in this example, represents a distance from the seat pan 130 to the top of the headrest 120. The movement of the headrest 120 may be along the longitudinal direction of the backrest 110. As shown in for example in Fig. 3A and Fig. 3B, the headrest 120 is movable up and down relative to the base 140. This may be a vertical movement relative to the base 140. If the backrest 110 is inclined slightly backwards, the movement of the headrest 120 is not exactly vertical, but still results in a change in height of the headrest 120 relative to the seat pan. Therefore, throughout this specification, when describing that the headrest 120 moves vertically or substantially vertically, this is intended to mean movements that cause an up or down movement of the headrest 120 relative to the seat pan 130 for adaptation to an upper body length from the hip area to the neck area. The seat pan 130 is adjustable to vary a seat pan depth d2, which, in this example, represents a distance from the backrest 110 to a front edge of the seat pan 130. This distance d2 is shown as being horizontal in Fig. 3A and 3B, but as for the headrest, the movement of the seat pan 130 does not need to be exactly horizontal. Therefore, throughout this specification, when describing that the seat pan 130 moves horizontally or substantially horizontally, this is intended to mean a movement forwards or rearwards relative to the backrest 110 for adaptation to a leg length from the hip area to the knee area. The side wings 112 are adjustable to vary a side wing spacing d3, which is a lateral distance between the side wings 112.

An actuating device 160 of the child safety seat 100 enables adjustment of these dimensions d1-d3 by engaging with a coupling mechanism 150, which is not visible in Figs. 1A and 1B. The coupling mechanism 150 operatively connects the headrest 120, seat pan 130, and side wings 112, and allows for concurrent adjustment of the headrest height d1, seat pan depth d2, and side wing spacing d3 by actuation of the actuating device 160.

Accordingly, to show such concurrent adjustment, Figs. 1A and 1B illustrate the child safety seat 100 in two different configurations, demonstrating the adjustability of its key dimensions to accommodate children of various sizes.

In Fig. 1A, the child safety seat 100 is shown in a first configuration where the adjustable dimensions are set to their minimum values. The headrest height d1 is at its lowest position, bringing the headrest 120 closer to the seat pan 130. The seat pan depth d2 is at its shortest, with the front edge of the seat pan 130 positioned nearest to the backrest 110. The side wing spacing d3 is at its narrowest, with the side wings 112 positioned closest to each other. The minimum dimensions may be the dimensions for a youngest or smallest child that the child safety seat 100 is designed to accommodate or may be dimensions for enabling transport or carrying of the child safety seat 100.

In contrast, Fig. 1B depicts the child safety seat 100 in a second configuration where the adjustable dimensions are set to their maximum values. The headrest height d1 is extended to its highest position, increasing the vertical distance between the headrest 120 and the seat pan 130. The seat pan depth d2 is at its longest, with the front edge of the seat pan 130 extended furthest from the backrest 110. The side wing spacing d3 is at its widest, with the side wings 112 positioned farthest apart from each other. As the side wing spacing d3 increases, the side wings 112 move into recesses formed by the side shells 114, such that, in the second configuration of Fig. 1B, the edges of the side wings 112 are substantially surrounded by the side shells 114. The maximum dimensions may be the dimensions for an oldest or largest child that the child safety seat 100 is designed to accommodate.

These two configurations demonstrate the range of adjustability provided by the child safety seat 100, allowing it to accommodate children of different sizes as they grow. The coupling mechanism 150, which will be described below, and actuating device 160 may enable these adjustments to be made concurrently, providing a seamless transition between different configurations to suit the changing needs of the child occupant. Of course, while these configurations describe the range of possible motion, the child safety seat 100 may also be configured in other configurations, where the internal dimensions, i.e. d1-d3, are between the minimum dimensions and maximum dimensions shown by these figures.

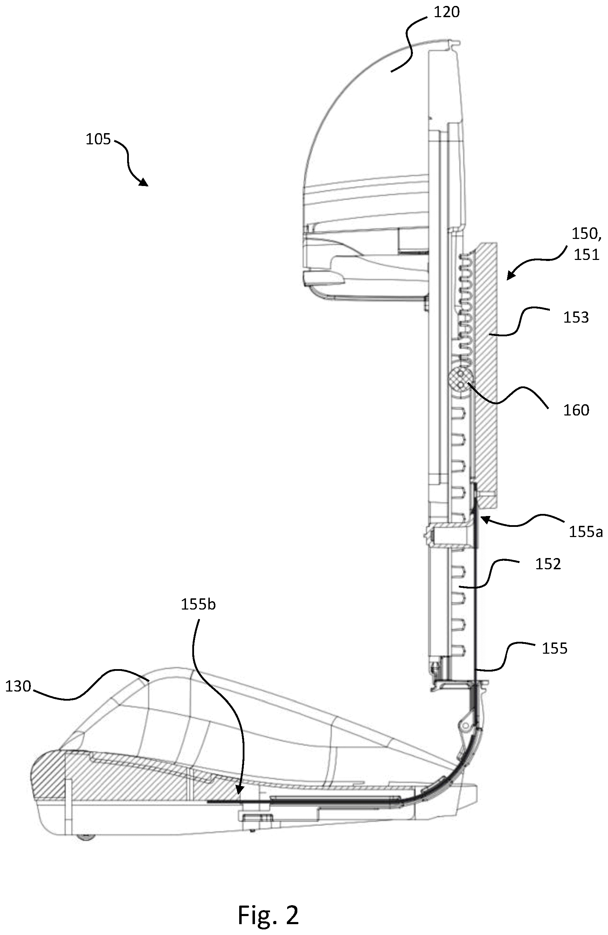

Fig. 2 illustrates a section view of a portion 105 of the child safety seat 100, revealing the internal mechanism, specifically the coupling mechanism 150, that enables concurrent adjustment of the headrest 120 and the seat pan 130. The portion 105 includes the headrest 120, the seat pan 130, and the coupling mechanism 150. The backrest 110, side wings 112 and side shells 114 are not shown in this figure for ease of explanation.

As described above, the coupling mechanism 150 operatively connects the headrest 120 and the seat pan 130. The coupling mechanism 150 comprises a rack and pinion system 151, which enables concurrent adjustment of the headrest height d1 and the seat pan depth d2 (not indicated in this figure).

The rack and pinion system 151 includes a headrest rack 152 associated with the headrest 120 and a seat pan rack 153 associated with the seat pan 130. The headrest rack 152 and the seat pan rack 153 are interconnected by a pinion (not shown in Fig. 2), which facilitates the coordinated movement of both components.

The headrest rack 152 is directly attached to the headrest 120, so that movement of the headrest rack 152 results in direct movement of the headrest 120. The headrest 120 moves substantially vertically up and down when the seat is in use and fitted in a vehicle seat. Movement of the headrest rack 152 is therefore also substantially vertically up and down.

The seat pan rack 153 is oriented so that its teeth face the headrest rack 152, enabling the pinion to interface with both racks 152, 153. The seat pan rack 153 therefore also moves substantially vertically up and down during use. However, the seat pan 130 moves substantially horizontally, and so a connecting member 155 is connected to the seat pan rack 153 at a first end 155a of the connecting member 155 and to the seat pan 130 at a second end 155b of the connecting member 155. The connecting member 155 transfers movement from the rack and pinion system 151 to the seat pan 130, and specifically converts vertical movement of the seat pan rack 153 into horizontal movement of the seat pan 130, thereby adjusting the seat pan depth d2. In some examples, the connecting member 155 may be a flexible member, allowing for variations in inclination of the backrest 110 while maintaining the coupling between the headrest 120 and the seat pan 130. In some examples, the movement of the headrest 120 and/or the seat pan 130 may be a long a curved path, for example depending on the specific design of the rack and pinion system 151 or of the coupling mechanism more generally.

The actuating device 160 is also shown in Fig. 2. The actuating device 160 directly connects to the pinion, resulting in rotation of the pinion when the actuating device 160 is operated and leading to concurrent movement of both the seat pan rack 153 and the headrest rack 152.

The seat pan 130 also comprises means for fine-adjustment of the seat pan depth d2 without adjusting the headrest height d1. This feature may be implemented through a secondary adjustment mechanism of the seat pan 130 that allows for minor adjustments to the seat pan depth d2 independently of the main coupling mechanism 150. The secondary adjustment mechanism may be a seat pan adjustment mechanism 190 enabling fine-adjustment of the seat pan 130 forwards or rearwards relative to the second end 155b of the connecting member 155. The connection between the seat pan 130 and the second end 155b of the connecting member 155 may therefore be a movable connection and may comprise the seat pan adjustment mechanism 190 (see Fig. 1B). The fine-adjustment of position of the seat pan 130 at the second end 155b of the connecting member 155 accordingly results in a minor movement of the seat pan 130 relative to the back rest so that the seat pan depth d2 is just slightly increased or decreased. The seat pan adjustment mechanism 190 may e.g. be implemented as a slot in the second end 155b of the connecting member 155 and a corresponding pin arranged on the seat pan 130 allowing the pin to move in the slot to move the seat pan 130 relative to the second end 155b.

Figs. 3A and 3B illustrate sectional views of the child safety seat 100 as a whole, in contrast to the portion 105 shown in Fig. 2. Figs. 3A and 3B show the seat 100 in the first and second configurations shown in Figs. 1A and 1B respectively, and the internal mechanism, i.e. the coupling mechanism 150 is again made visible to enable its movement between the first and second configurations to be understood.

Fig. 3A shows the child safety seat 100 in the first configuration where the headrest height d1 and seat pan depth d2 are set to their minimum values. The backrest 110 is visible, with the headrest 120 positioned at an upper portion of the backrest 110, while the seat pan 130 extends from a lower portion of the backrest 110 and is provided on the base 140.

In this configuration, the headrest 120 is at its lowest position relative to the seat pan 130, resulting in the minimum headrest height d1. The seat pan 130 is retracted towards the backrest 110, providing the minimum seat pan depth d2. The coupling mechanism 150 operatively connects the headrest 120 and the seat pan 130, enabling their concurrent adjustment.

Fig. 3B depicts the child safety seat 100 in the second configuration where the headrest height d1 and seat pan depth d2 are set to their maximum values. In this second configuration, the headrest 120 is moved to its highest position relative to the seat pan 130, increasing the headrest height d1. Concurrently, the seat pan 130 is extended away from the backrest 110, maximizing the seat pan depth d2. To transfer from the first configuration in Fig. 3A to the second configuration in Fig. 3B, a user of the child safety seat 100 may have rotated the actuating device 160 to move the coupling mechanism 150 and specifically the rack and pinion system 151.

As can be seen between Figs. 3A and 3B, operation of the actuating device 160 causes concurrent adjustment of the headrest 120 relative to the side wings 112 and backrest 110 and of the seat pan 130 relative to the base 140, the backrest 110, and the side wings 112. As can also be seen between these figures, the coupling mechanism 150 is configured for proportional adjustment between the headrest 120 and the seat pan 130, so that the headrest height d1 increases more between its maximum and minimum than the seat pan depth d2. The proportional adjustment is based on a predefined ratio. This ratio ensures that the variation in the headrest height d1 is proportionally larger compared to the variation of the seat pan depth d2. The ratio of variation between headrest height d1 and seat pan depth d2 may be in the range between 1:1 to 3:1, allowing for improved adjustment to accommodate children of different sizes. To achieve such proportional adjustment, teeth 156 of the headrest rack 152 are more widely spaced than teeth 157 of the seat pan rack 153, resulting in the headrest rack 152 and therefore the headrest 120 moving more than the seat pan rack 153 and therefore the seat pan 130 for a given operation and movement of the actuating device 160. In other examples, the ratio may be 1:1, resulting in the same adjustment of the seat pan depth d2 and the headrest height d1.

Although not shown in Figs. 3A and 3B, the side wings 112 of this example of a child safety seat 100 are also configured to adjust during operation of the coupling mechanism 150.

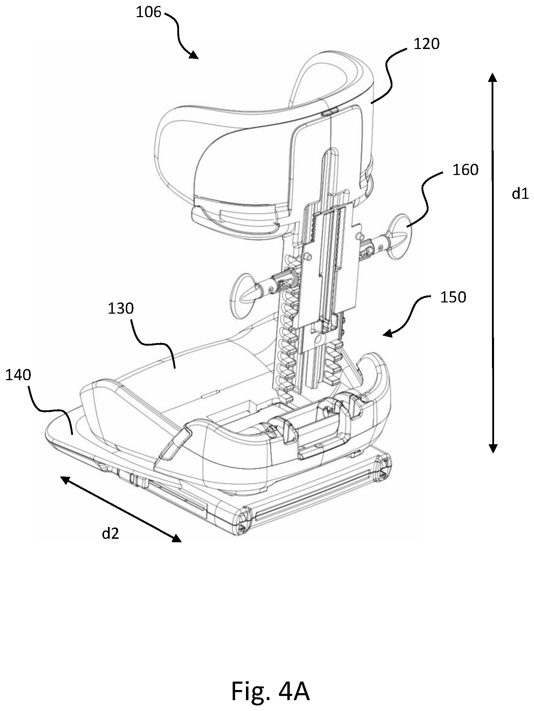

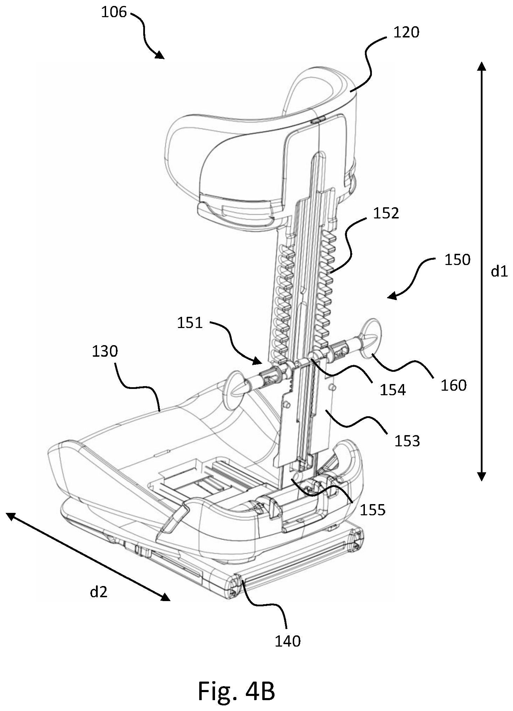

Figs. 4A and 4B illustrate rear perspective views of a further portion 106 of the child safety seat 100, enabling the adjustment between the first configuration (Fig. 4A) and second configuration (Fig. 4B) to be viewed from a different angle. Figs. 4A and 4B show the seat pan 130 on the base 140, the headrest 120, the coupling mechanism 150, and the actuating device 160. In these figures, the relative movement of the seat pan 130 to adjust the seat pan depth d2 and the headrest 120 to adjust the headrest height d1 can be seen in three dimensions.

The actuating device 160 is visible in Figs. 4A and 4B, positioned on the side of the child safety seat 100. The actuating device 160 comprises two turning knobs in this example, with one to either side of the child safety seat 100. This enables easy access for the person operating the actuating device, as he or she may choose to use the actuating device which is more convenient and accessible, e.g. the one towards the door opening of the vehicle. The actuating device 160 may be a handle or other form of actuator for manual operation in other examples.

The connecting member 155 is not shown in Fig. 4A for clarity, but is visible in Fig. 4B. Also visible in Fig. 4B, but not in Fig. 4A is the pinion 154. The pinion 154 has a first section for engaging the headrest rack 152 and a second section for engaging the seat pan rack 153, enabling the pinion 154 to concurrently control both racks 152, 153. The first section is configured to interact with the teeth of the headrest rack 152, while the second section is configured to interact with the teeth of the seat pan rack 153.

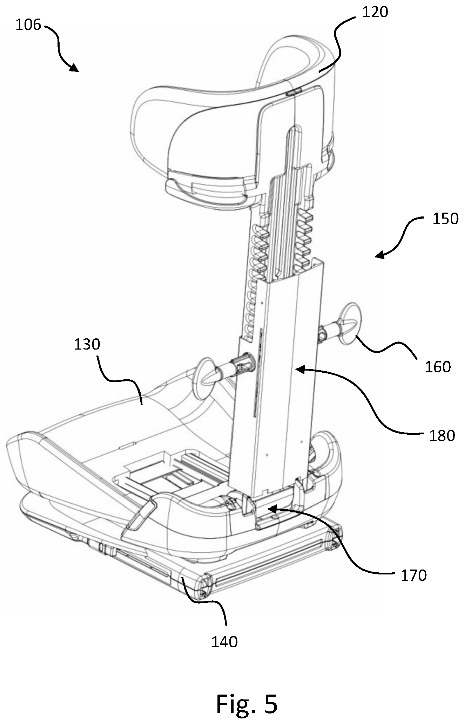

The portion 106 of the child safety seat 100 shown in Figs. 4A and 4B is also shown in Fig. 5. In Fig. 5, a cover 180 is shown extending over the coupling mechanism 150. The cover 180 may protect and support the coupling mechanism 150 as well as prevent objects such as seatbelts from becoming entangled with it. The knobs of the actuating mechanism 160 extend through the cover to enable their operation by a user.

Fig. 5 also shows a hinge 170 of the seat 100. The backrest 110 of the child safety seat 100 is foldable relative to the seat pan 130, and this is facilitated by the inclusion of the hinge 170 where the backrest 110 meets the seat pan 130. This folding feature allows the backrest 110 to fold against the seat pan 130, creating a compact configuration suitable for storage and transportation. The hinge 170 may be arranged to allow folding when set conditions are met, such as when the headrest 120 is in its lowermost position and/or when the seat pan 130 is fully retracted.

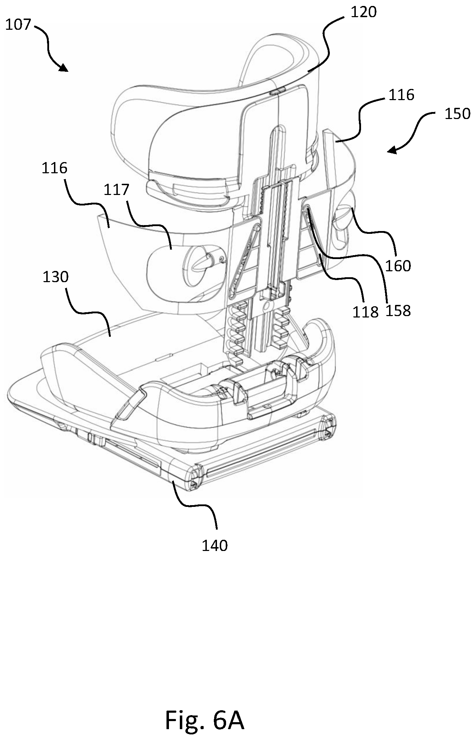

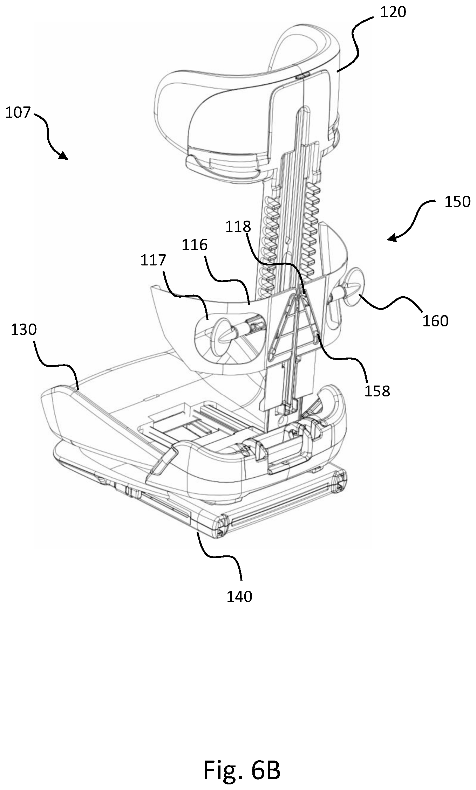

Figs. 6A and 6B show a further portion 107 of the child safety seat 100, focusing on the adjustment mechanism for the side wings 112. In these figures, parts of the side wings are also included, in addition to the features shown in the portion 106 shown in Figs. 4A and 4B. As will be described, the mechanism for adjusting the side wing spacing d3 is here based on using inserts 116 connected to the coupling mechanism, which inserts, as a result of a wedge arrangement, forces the front of the side wings 112 inwards for decreasing the side wing spacing d3 or allows the front of the side wings to move outwards increasing the side wing spacing d3, upon a forwards or rearwards movement of the inserts 116 caused by the coupling mechanism. The resulting movement of the side wings 112 is thus an inwards or outwards rotation, i.e. pivoting about an axis in the z-direction (see Fig. 1A), to adjust the side wing spacing d3. This rotational movement is illustrated in Fig. 1A by arrow A, indicating outwards rotational movement of the right side wing of the seat when increasing the side wing spacing d3. Accordingly, when the side wing spacing d3 is to be decreased, the right side wing rotates inwardly, in the opposite direction of arrow A. Similarly, the left side wing rotates outwards (opposite direction of the arrow A) when increasing the side wing spacing d3, and inwards when decreasing the side wing spacing d3.

The side wings are not shown in their entirety in Fig. 6A and 6B, but a part of each side wing is shown in the form of the side wing insert 116. Two side wing inserts 116 are therefore shown, with one to each side of the seat. The side wing insert 116 is part of the structure of the side wing 112 in use. Additionally, the side wings 112 comprises a stretched covering, at least, which forms a soft texture.

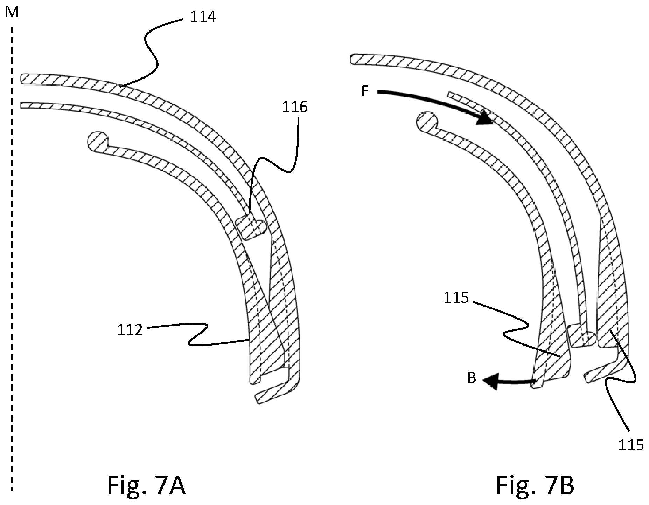

Fig. 7A and 7B illustrate a schematic top view of a cross-section through one of the side wings 112, insert 116, and side shell 114. The connection to the backrest 110 or to the remaining parts of the seat 100 is omitted for clarity and to better illustrate the relevant details. The opposite side wing 112, insert 116, and side shell 114 are arranged and configured identically, but mirrored about the axis M. The side wing 112 and the side shell 114 are each provided with a wedge 115, arranged overlapping, as seen in Fig. 7A. The insert 116 is arranged between the side wing 112 and the side shell 114 and is movable so that the insert 116 can be moved between a position where it is away and not in contact with the wedges 115, as in Fig. 7A, and a position where it is between and in contact with the wedges 115, as seen in Fig. 7B. In Fig. 7B, the insert 116 has been moved in the direction of the arrow F relative to the position in Fig. 7A. The insert 116, due to the wedges 115 and the rigid, immovable side shell 114, forces the side wing 112 inwards in the direction of the arrow B of Fig. 7B.

Each side wing insert 116 is formed from a curved wing, which attaches to the seat, and particularly to the coupling mechanism 150, at a rear of the seat. The side wing insert 116 includes an aperture 117 for a turning knob of the actuating device 160 to pass through for access by a user (see Fig 6A and 6B).

Referring again to Fig. 6A and 6B, the side wing insert 116 also includes a slot 118 by which it connects to the coupling mechanism 150. A pin 158 of the coupling mechanism 150 is received through the slot 118. The pin 158 forms part of the seat pan rack 153 which moves substantially vertically up and down during operation of the actuating device 160, thereby causing up and down movement of the pin 158. The slot 118 is slanted relative to said vertical movement, meaning that movement of the pin 158 is translated to horizontal or sideways movement of the side wing insert 116, at least at its rear end. Specifically, as the pin moves down the slot, the rear part of the side wing insert 116 is moved horizontally in, while upward movement of the pin causes the rear part of the side wing insert 116 to move horizontally out. Due to the curved shape of the inserts 116, this sideways movement at rear of the insert 116 results in a forwards or rearwards movement of the front part of the insert 116, as seen in Fig. 7B. This can be seen between Fig. 6A and 6B, where, as the seat is transitioned from the first configuration to the second configuration, the pin 158 moves from an upper end of the slot 118 to a lower end of the slot 118. Due to its placement between the side wings 112 and the side shell 114, forming a wedge for the inserts 116, the horizontal movement of the side wing inserts 116 causes the inserts 116 to move and force an inwards rotation of the side wings 112 to change the side wing spacing d3. As a result, as the headrest height d1 and seat pan depth d2 are increased, so too is the side wing spacing d3.

As a result, the coupling mechanism 150 can be said to operatively connect the side wings 112 with the headrest 120 and with the seat pan 130, allowing for the adjustment of the side wing spacing d3 to occur concurrently with the adjustment of the headrest height d1 and the seat pan depth d2.

In alternative embodiments, the side wings 112 are arranged to be moved laterally to change the side wing spacing d3. For example, the rack and pinion system 151 may comprise further rack and pinions in the rack and pinion system 151.

### List of reference numbers

| | |
|---|---|
| *100* | *Child safety seat* |
| *105* | *Seat portion* |
| *106* | *Seat portion* |
| *107* | *Seat portion* |
| *110* | *Backrest* |
| *112* | *Side wings* |
| *114* | *Side shell* |
| *115* | *Wedge* |
| *116* | *Side wing insert* |
| *117* | *Aperture* |
| *118* | *Slot* |
| *120* | *Headrest* |
| *130* | *Seat pan* |
| *140* | *Base* |
| *150* | *Coupling mechanism* |
| *151* | *Rack and pinion system* |
| *152* | *Headrest rack* |
| *153* | *Seat pan rack* |
| *154* | *Pinion* |
| *155* | *Connecting member* |
| *155a* | *First end of connecting member* |
| *155b* | *Second end of connecting member* |
| *156* | *Teeth* |
| *157* | *Teeth* |
| *158* | *Pin* |
| *160* | *Actuating device* |
| *170* | *Hinge* |
| *180* | *Cover* |
| *190* | *Seat pan adjustment mechanism* |
| *C* | *Longitudinal center line of backrest* |
| *d1* | *Headrest height* |
| *d2* | *Seat pan depth* |
| *d3* | *Side wing spacing* |

## Claims

1. A child safety seat (100) for use in a vehicle seat comprising:
a backrest (110),
a headrest (120), and
a seat pan (130),
wherein the headrest (120) is adjustable to vary a headrest height (d1),
wherein the seat pan (130) is adjustable to vary a seat pan depth (d2), and
wherein the child safety seat comprises a coupling mechanism (150) operatively connecting the headrest (120) and the seat pan (130) in such a way that the headrest height (d1) and the seat pan depth (d2) are adjusted concurrently.

2. The child safety seat (100) according to claim 1, wherein the coupling mechanism (150) is configured for proportional adjustment between the headrest and the seat pan based on a predefined ratio.

3. The child safety seat (100) according to claim 1 or claim 2, wherein the coupling mechanism (150) is configured such that the variation in the headrest height (d2) is proportionally larger compared to the variation of the seat pan depth (d2).

4. The child safety seat (100) according to any of claims 1 to 3, wherein the coupling mechanism (150) comprises a rack and pinion system (151).

5. The child safety seat (100) according to any of the preceding claims, wherein the child safety seat (100) comprises an actuating device (160) for adjusting the headrest (120) and the seat pan (130).

6. The child safety seat (100) according to any of the preceding claims, comprising two side wings (112) provided on opposite sides of the backrest (110) for supporting the upper arms and shoulders of a child when seated in the seat (100), wherein the side wings (112) are adjustable to vary a side wing spacing (d3), the side wing spacing (d3) being a lateral distance between the side wings (112), wherein the coupling mechanism (150) operatively connects the side wings (112) with the headrest and/or with the seat pan (130) in such a way that the side wing spacing (d3) is adjusted concurrently with the adjustment of the headrest height (d1) and the seat pan depth (d2).

7. The child safety seat (100) according to any of the preceding claims, comprising a side shell (114) at each side of the backrest (110), each side shell (114) extending from the backrest (110) and covering at least partly an outside of the side wing (112), wherein the side shells (114) are non-movable to ensure a fixed outer lateral dimension of the seat (100).

8. The child safety seat (100) according to any of the preceding claims, wherein the backrest (110) is foldable relative to the seat pan (130) to allow the backrest (110) to fold against the seat pan (130) thereby enabling a compact configuration of the child safety seat (100) suitable for storage and/or transportation.

9. The child safety seat (100) according to any of the preceding claims, wherein the seat pan (130) comprises a seat pan adjustment mechanism (190) configured to allow fine-adjustment of the seat pan (130) to increase or decrease the seat pan depth (d2) without varying the headrest height (d1).

10. The child safety seat (100) according to any of the preceding claims, wherein the child safety seat (100) comprises belt receiving means for receiving and guiding a seat belt of the vehicle for securing a child in the seat.

11. A method of adjusting the internal dimensions of a child safety seat according to claims 1 to 10, comprising operating the coupling mechanism (150) to increase or decrease the internal seating dimensions concurrently.
